# EUROPÄISCHE PATENTSCHRIFT

(11) **EP 3 434 558 B1**
(45) Veröffentlichungstag und Bekanntmachung des Hinweises auf die Patenterteilung: **17.07.2019**
(21) Anmeldenummer: 18181605.9
(22) Anmeldetag: 04.07.2018
(51) Int. Cl.: B62D 5/093, B62D 5/07

(54) **HYDRAULISCHE LENKEINRICHTUNG MIT LASTSIGNAL**
HYDRAULIC STEERING UNIT WITH LOAD SIGNAL
DISPOSITIF DE DIRECTION HYDRAULIQUE À SIGNAL DE CHARGE

(30) Priorität: 28.07.2017 DE 102017117149
(43) Veröffentlichungstag der Anmeldung: 30.01.2019
(73) Patentinhaber: Hydraulik Nord Fluidtechnik GmbH & Co. KG, 19370 Parchim (DE)
(72) Erfinder: Bergmann, Erhard, 19079 Banzkow / OT Mirow (DE); Schildmann, Manfred, 19372 Karrenzin (DE); Vossberg, Hartmut, 19370 Parchim (DE)
(74) Vertreter: Gulde & Partner

(56) Entgegenhaltungen:
- DE-A1- 4 410 693

## Beschreibung

Die Erfindung bezieht sich auf eine hydraulische Lenkeinrichtung nach dem Oberbegriff des Anspruchs 1. Solche Lenkeinrichtungen kommen in mobilen Anlagen zum Einsatz, die aus einem Lenkkreislauf und aus einem Arbeitskreislauf bestehen und die beide von einer gemeinsamen Pumpe versorgt werden, wobei der Lenkkreislauf Priorität besitzt.

Solche Anlagen bestehen in der Hauptsache aus einer gemeinsamen Versorgungspumpe und einem gemeinsamen Stromteilventil sowie einer Lenkeinrichtung und einem Lenkzylinder einerseits und einem Arbeitskreislauf andererseits. Das Stromteilventil ist federbelastet ausgeführt und erhält sein Steuersignal als so genanntes Lastsignal aus der hydraulischen Lenkeinrichtung. Nach diesem Lastsignal reguliert das Stromteilventil seine Durchflussquerschnitte in der Art, dass der Lenkkreislauf vorrangig und bedarfsgerecht und der Arbeitskreislauf mit dem überschüssigen Drucköl versorgt wird. Es ist bekannt, das Lastsignal statisch oder dynamisch aufzubereiten. Auf Grund der hohen Reaktionsfähigkeit eines dynamischen Lastsignales setzt sich diese Aufbereitungsart in der Praxis verstärkt durch.

So ist beispielsweise eine gattungsgemäße Lenkeinrichtung mit einem dynamischen Lastsignal aus der EP 0 096 963 A2 bekannt. Diese Lenkeinrichtung besitzt einen Lastsignalpfad, der von der Hauptstromleitung vor der Lenkeinrichtung abzweigt, einerseits zur federbelasteten Seite des Stromteilventiles und andererseits zu einem gesonderten Anschluss der Lenkeinrichtung führt, innerhalb der Lenkeinrichtung nach der ersten verstellbaren Drossel wieder in die Hauptstromleitung mündet und gleichzeitig zum Rücklauf führt. In dem zum Rücklauf führenden Teil des Lastsignalpfades befindet sich eine von der Lenkeinrichtung betätigbare und sich zur ersten verstellbaren Drossel umgekehrt proportional verhaltende Verstelldrossel. Diese Lenkeinrichtung besitzt den Nachteil, dass zur Aufrechterhaltung einer vorzugsweisen und bedarfsgerechten Versorgung des Lenkaggregates auch bei hohen Lenkdrehzahlen und damit hohen Durchflussmengen eine Regelfeder mit einer relativ hohen Federsteife erforderlich ist. In der Neutralstellung, also bei nicht betätigter Lenkeinrichtung, muss aber stets gegen diese starke Regelfeder gearbeitet werden, um den Arbeitskreislauf zu versorgen. Das bedingt hohe Energie- und Leistungsverluste der Hydraulikanlage.

DE 44 10 693 als nächstliegender Stand der Technik schlägt eine Lösung zur Verbesserung der Energiebilanz der gattungsgemäßen Hydraulikanlagen vor. Mit der bedarfsgerechten, nur beim Lenken wirkenden Erhöhung der Druckdifferenz wird der Einsatz einer schwächeren Druckfeder möglich. Hierzu sind in einer Nebenleitung eine Drossel und eine verstellbare Lastsignaldrossel in Reihe geschaltet. Somit offenbart die DE 44 10 963 eine hydraulische Lenkeinrichtung für mobile Anlagen mit einem Lenkkreislauf für eine Lenkeinrichtung und einem Arbeitskreislauf für eine Arbeitshydraulik, wobei der Lenkkreislauf und die Arbeitshydraulik über ein gemeinsames Stromteilventil mit einer Versorgungspumpe verbunden sind, das Stromteilventil mit einem Lastsignalanschluss der Lenkeinrichtung verbunden ist, wobei die Lenkeinrichtung eine verstellbare Eingangsdrossel aufweist, die über einen Zulaufanschluss der Lenkeinrichtung mit dem Stromteilventil verbunden ist, zwischen dem Lastsignalanschluss und stromab der Eingangsdrossel eine Reihenschaltung aus einer Drossel und einer verstellbaren zweiten Lastsignaldrossel angeordnet ist, der Lastsignalanschluss ferner über eine verstellbare erste Lastsignaldrossel mit einem Rücklaufanschluss der Lenkeinrichtung verbunden ist.

Es besteht die Aufgabe, bei Lenkeinrichtungen der vorliegenden Art das Druckniveau des Lastsignals besser bedarfsgerecht zu erhöhen.

Erfindungsgemäß wird diese Aufgabe durch eine hydraulische Lenkeinrichtung mit den in Anspruch 1 genannten Merkmalen gelöst. Dadurch, dass die Lenkeinrichtung eine verstellbare Eingangsdrossel aufweist, die über einen Zulaufanschluss der Lenkeinrichtung mit dem Stromteilventil verbunden ist, zwischen dem Lastsignalanschluss und stromab der Eingangsdrossel eine Parallelschaltung aus einer Drossel und einer verstellbaren Lastsignaldrossel angeordnet ist, der Lastsignalanschluss ferner über eine weitere verstellbare Lastsignaldrossel mit dem Rücklaufanschluss der Lenkeinrichtung verbunden ist, ist vorteilhaft möglich, das Lastsignal drehzahlabhängig bereitzustellen. Bei höherer Drehzahl, das heißt bei einer schnelleren Lenkbewegung, die von einem Lenkrad auf einen Rotor einer Verdrängereinheit der Lenkeinrichtung übertragen wird, wird eine höhere Regeldruckdifferenz zur Verfügung gestellt. Somit sind insbesondere auch schnellere Lenkbewegungen und damit auch Richtungsänderungen bei den mit hydraulischen Lenkeinrichtungen ausgestatteten mobilen Anlagen, wie beispielsweise Fahrzeuge, insbesondere Gabelstapler oder dergleichen möglich.

In bevorzugter Ausgestaltung der Erfindung ist vorgesehen, dass die Eingangsdrossel und die zweite Lastsignaldrossel eine entgegengesetzte Schließcharakteristik besitzen. Hierdurch wird vorteilhaft möglich, dass bei einer Lenkanforderung die Eingangsdrossel öffnet, während gleichzeitig die zweite Lastsignaldrossel schließt, so dass in Abhängigkeit der Lenkbewegung die Regeldruckdifferenz am Stromteilventil erhöht wird.

In bevorzugter Ausgestaltung der Erfindung ist vorgesehen, dass die zweite Lastsignaldrossel erst bei einer hohen Lenkgeschwindigkeit schließt. Hierdurch wird vorteilhaft erreicht, dass die höhere Regeldruckdifferenz nicht sofort, sondern erst bei beziehungsweise kurz vor Erreichen der Maximaldrehzahl des Lenkrades beziehungsweise des Rotors der Lenkeinrichtung erzielt wird. Hierdurch kann sehr bedarfsgerecht das Druckniveau des Lastsignals gerade bei hohen Drehzahlen erzielt werden.

Die Erfindung soll nachstehend anhand eines Ausführungsbeispieles näher erläutert werden.

Dazu zeigen:
- Fig. 1: einen Lenkungs- und einen Arbeitskreislauf mit gemeinsamer Versorgungspumpe und
- Fig. 2: einen Schnitt durch eine Lenkeinrichtung.

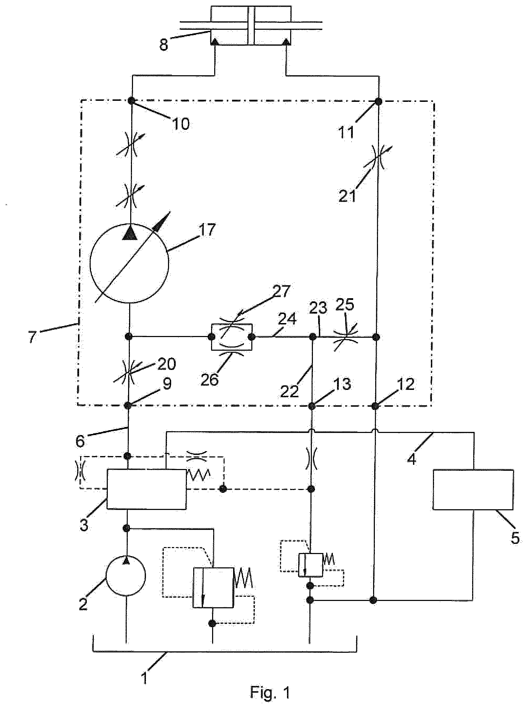

Der Kreislauf nach der Fig. 1 setzt sich aus einem Lenkkreislauf und einem Arbeitskreislauf zusammen und besteht aus gemeinsamen Elementen, einem Tank 1, einer Versorgungspumpe 2 und einem Stromteilventil 3.

Vom Stromteilventil 3 zweigt eine Zulaufleitung 4 für eine Arbeitshydraulik 5 und eine Zulaufleitung 6 für eine Lenkeinrichtung 7 ab.

Ein Lenkzylinder 8 ist der Lenkeinrichtung 7 nachgeordnet. Die Lenkeinrichtung 7 besitzt einen mit dem Stromteilventil 3 verbundenen Zulaufanschluss 9, zwei Zylinderanschlüsse 10 und 11 für den Lenkzylinder 8, einen mit dem Tank verbundenen Rücklaufanschluss 12 sowie einen Lastsignalanschluss 13, der über Drosseln Verbindung mit der federbelasteten Seite des Stromteilventiles 3 und der Zulaufleitung 6 zur Lenkeinrichtung 7 hat.

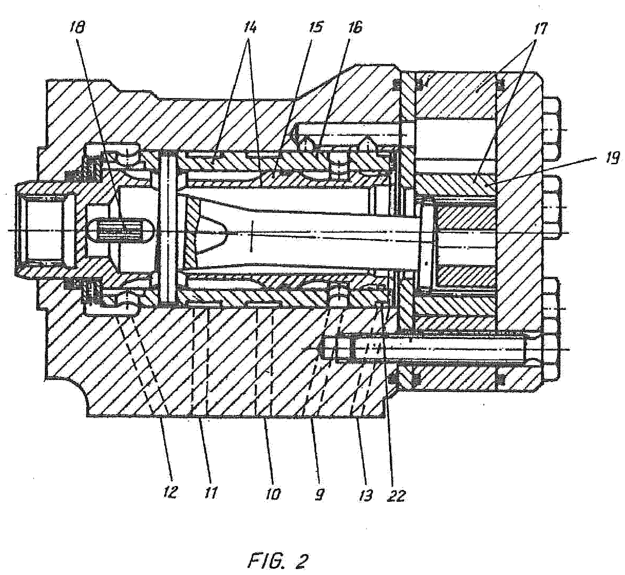

Wie auch die Fig. 2 zeigt, besteht die Lenkeinrichtung 7 in der Hauptsache aus einer Steuereinheit 14 mit einem inneren Steuerkolben 15 und einer äußeren Steuerhülse 16 und einer nach dem Gerotorprinzip arbeitenden Verdrängereinheit 17. Der Steuerkolben 15 und die Steuerhülse 16 besitzen miteinander und mit der Verdrängereinheit 17 kommunizierende axiale und radiale Kanäle und sind beide gegen die Kraft einer Feder 18 in einem begrenzten Winkel zueinander drehbar.

Die Steuerhülse 16 ist mechanisch mit dem Rotor 19 der Verdrängereinheit 17 verbunden.

In der Steuereinheit 14 befinden sich in der Hauptleitung stromaufwärts vor der Verdrängereinheit 17 eine verstellbare Eingangsdrossel 20 und stromabwärts des Lenkzylinders 8 eine verstellbare Ausgangsdrossel 21. Weiterhin befindet sich in der Steuereinheit 14 ein Strömungspfad 22 für das Lastsignal, der seinen Anfang im Lastsignalanschluss 13 nimmt und der sich in einen ersten Pfad 23 mit Verbindung zum Rücklaufanschluss 12 und in einen zweiten Pfad 24 mit Verbindung zur Hauptleitung stromabwärts der verstellbaren Eingangsdrossel 20 aufteilt. Im ersten Pfad 23 ist eine erste verstellbare Lastsignaldrossel 25 und im zweiten Pfad 24 parallel eine Drossel 26 und eine zweite verstellbare Lastsignaldrossel 27 angeordnet. Die verstellbaren Drosseln 20, 25 und 27 sind hinsichtlich ihrer Schließcharakteristik so ausgelegt, dass die erste verstellbare Lastsignaldrossel 25 und die verstellbare Eingangsdrossel 20 entgegengerichtet schließen und die zweite verstellbare Lastsignaldrossel 27 und die verstellbare Eingangsdrossel 20 ebenfalls entgegengerichtet schließen. Je nach Anwendungsfall ist es konstruktiv möglich, die Öffnungs- beziehungsweise Schließbewegung der genannten verstellbaren Drosseln zeitversetzt zu realisieren.

In der Neutralstellung der Lenkeinheit 14 ist die verstellbare Eingangsdrossel 20 geschlossen. Eine technisch gewollte Ölmenge von beispielsweise 1 l/min fließt über den Lastsignalanschluss 13 zur Lenkung 7. Aufgrund der gegengerichteten Schließcharakteristik ist die zweite verstellbare Lastsignaldrossel 27 offen. Auch die erste verstellbare Lastsignaldrossel 25 ist geöffnet.

Das von der Versorgungspumpe 2 bereitgestellte Öl baut in der Zulaufleitung 6 vor der Lenkeinrichtung 7 einen Druck auf, der sich einerseits als Drucksignal auf die nichtfederbelastete Seite des Stromteilventiles 3 fortpflanzt. Andererseits zweigt von gleicher Stelle der Zulaufleitung 6 ein Lastsignalstrom ab, der zur federbelasteten Seite des Stromteilventiles 3 und zum Lastsignalanschluss 13 der Lenkeinrichtung 7 geleitet wird. Über den Strömungspfad 22 und über die geöffnete verstellbare Lastsignaldrossel 25 im ersten Pfad 23 gelangt das Öl auf kurzem Weg in dem zum Tank 1 führenden Ablaufanschluss 12.

Im Strömungspfad 22 und damit an der federbelasteten Seite des Stromteilventiles 3 stellt sich somit ein gegenüber dem andersseitigen Drucksignal geringeres Druckniveau ein. Diese Druckverhältnisse am Stromteilventil 3 veranlassen eine Verschiebung des Regelschiebers im Stromteilventil 3 in die Stellung, die den gesamten Ölstrom über das Stromteilventil 3 abzüglich des zum Lastsignalanschluss 13 fließenden Lastsignalstromes zur Arbeitshydraulik 5 gewährleistet.

Bei Auslenkung des Steuerkolbens 15, zum Beispiel nach rechts bei Drehung des Lenkrades, öffnet die verstellbare Eingangsdrossel 20. Gleichzeitig schließt die erste verstellbare Lastsignaldrossel 25. Die zweite verstellbare Lastsignaldrossel 27 ist in Offenstellung. Das von der Versorgungspumpe 2 bereitgestellte Öl gelangt über das Stromteilventil 3 durch die Zulaufleitung 6 zum Zulaufanschluss 9 und von dort über die geöffnete verstellbare Eingangsdrossel 20 zur Verdrängereinheit 17. Hier wird das Öl dosiert und dem Lenkzylinder 8 bereitgestellt. Gleichzeitig fließt ein Lastsignalstrom von der Zulaufleitung 6 zum Lastsignalanschluss 13, von dort über die Drossel 26 und die zweite verstellbare Lastsignaldrossel 27 im zweiten Pfad 24 in den zur Verdrängereinheit 17 führenden Hauptstrom.

Die so entstandenen Druckverhältnisse am Stromteilventil 3 gewährleisten eine Position des Regelschiebers, der den von der Versorgungspumpe 2 bereitgestellten Ölstrom aufteilt. Die von der Lenkeinrichtung 7 nicht benötigte Ölmenge wird der Arbeitshydraulik 5 zur Verfügung gestellt.

Die Parallelschaltung der Drossel 26 mit der zweiten Lastsignaldrossel 27 führt zu folgendem Verhalten der Lenkeinrichtung 7:
Die Drossel 26 wirkt als Widerstand, ist jedoch durch die geöffnete zweite Lastsignaldrossel 27 überbrückt. Bei Einsetzen einer gewollten Lenkbewegung öffnet die verstellbare Eingangsdrossel 20. Bei der Lenkbewegung von beispielsweise 100 U/min an einem Lenkrad, die sich auf den Rotor 19 der Verdrängereinheit überträgt, ergibt sich über die Drossel 20 hervorgerufen durch die Druckfeder im Stromteilventil 3 eine Druckdifferenz von z. B. 10 bar. Sind schnellere Lenkbewegungen von beispielsweise 150 U/min gewünscht, wird eine größere Regeldruckdifferenz am Stromteilventil 3 erforderlich, um den für die gewünschte Lenkbewegung des Lenkrades erforderlichen Ölstrom zügig in die Lenkeinrichtung 7 zu leiten. Hierzu setzt nun die Schließbewegung der zweiten Lastsignaldrossel 27 ein. Durch Schließen der zweiten Lastsignaldrossel 27 wird eine Druckdifferenz über der Drossel 26 aufgebaut, die bei vollkommen geschlossener zweiter Lastsignaldrossel 27 beispielsweise 10 bar beträgt.

Diese zusätzliche Druckdifferenz addiert sich zu der über die Drossel 20 liegenden Druckdifferenz auf, so dass bei hohen Lenkgeschwindigkeiten, beispielsweise 150 U/min, an der Drossel 20 und somit am Stromteilventil 3 eine Druckdifferenz von 20 bar anliegt.

Diese erhöhte Druckdifferenz führt zu einem höheren maximalen Volumenstrom über der Drossel 20 und somit zu einer höheren Lenkgeschwindigkeit.

Die hohe Lenkgeschwindigkeit kann somit sehr schnell die gewünschte Lenkbewegung der mit der hydraulischen Lenkeinrichtung 7 ausgestatteten mobilen Anlage, beispielsweise einem Gabelstapler, ermöglichen. Es sind sehr schnelle Richtungsänderungen der Fahrtrichtung möglich.

Um die erhöhte Druckdifferenz bei der höheren Lenkgeschwindigkeit zu erreichen, kann die Schließcharakteristik der zweiten Lastsignaldrossel 27 so gewählt sein, dass die zweite Lastsignaldrossel 27 erst bei höheren Lenkgeschwindigkeiten schließt. Insbesondere kann vorgesehen sein, dass die zweite Lastsignaldrossel 27 erst bei beziehungsweise kurz vor Erreichen der Maximaldrehzahl des Lenkrades beziehungsweise des Rotors des Steuerventils 7 schließt. Erst dann wird die erhöhte Druckdifferenz bei der Drossel 20 erreicht.

### Bezugszeichenliste

- 1: Tank
- 2: Versorgungspumpe
- 3: Stromteilventil
- 4: Zulaufleitung
- 5: Arbeitshydraulik
- 6: Zulaufleitung
- 7: Lenkeinrichtung
- 8: Lenkzylinder
- 9: Zulaufanschluss
- 10: Zylinderanschluss
- 11: Zylinderanschluss
- 12: Rücklaufanschluss
- 13: Lastsignalanschluss
- 14: Steuereinheit
- 15: Steuerkolben
- 16: Steuerhülse
- 17: Verdrängereinheit
- 18: Feder
- 19: Rotor
- 20: Eingangsdrossel
- 21: Ausgangsdrossel
- 22: Strömungspfad
- 23: Pfad
- 24: Pfad
- 25: erste Lastsignaldrossel
- 26: Drossel
- 27: zweite Lastsignaldrossel

## Patentansprüche

1. Hydraulische Lenkeinrichtung für mobile Anlagen, mit einem Lenkkreislauf für eine Lenkeinrichtung (7) und einem Arbeitskreislauf für eine Arbeitshydraulik (5), wobei der Lenkkreislauf und die Arbeitshydraulik (5) über ein gemeinsames Stromteilventil (3) mit einer Versorgungspumpe (2) verbunden sind, das Stromteilventil (3) mit einem Lastsignalanschluss (13) der Lenkeinrichtung (7) verbunden ist,
**wobei**
die Lenkeinrichtung (7) eine verstellbare Eingangsdrossel (20) aufweist, die über einen Zulaufanschluss (9) der Lenkeinrichtung (7) mit dem Stromteilventil (3) verbunden ist, zwischen dem Lastsignalanschluss (13) und stromab der Eingangsdrossel (20) eine Parallelschaltung aus einer Drossel (26) und einer verstellbaren zweiten Lastsignaldrossel (27) angeordnet ist, der Lastsignalanschluss (13) ferner über eine verstellbare erste Lastsignaldrossel (25) mit einem Rücklaufanschluss (12) der Lenkeinrichtung (7) verbunden ist.

2. Hydraulische Lenkeinrichtung nach Anspruch 1,
**dadurch gekennzeichnet, dass**
die Eingangsdrossel (20) und die zweite Lastsignaldrossel (27) eine entgegengesetzte Schließcharakteristik besitzen.

3. Hydraulische Lenkeinrichtung nach einem der vorhergehenden Ansprüche,
**dadurch gekennzeichnet, dass**
die Eingangsdrossel (20) in Neutralstellung der Lenkeinrichtung (7) geschlossen ist und die zweite Lastsignaldrossel (27) geöffnet ist.

4. Hydraulische Lenkeinrichtung nach einem der vorhergehenden Ansprüche,
**dadurch gekennzeichnet, dass**
die zweite Lastsignaldrossel (27) erst bei höheren Lenkgeschwindigkeiten schließt.

## Claims

1. A hydraulic steering device for mobile installations, having a steering circuit for a steering device (7) and a power circuit for power hydraulics (5), wherein the steering circuit and the power hydraulics (5) are connected to a supply pump (2) via a shared flow-divider valve (3), the flow-divider valve (3) is connected to a load signal port (13) of the steering device (7),
**wherein**
the steering device (7) has an adjustable input throttle (20) which is connected to the flow-divider valve (3) via an inlet port (9) of the steering device (7), a parallel circuit of a throttle (26) and an adjustable second load signal throttle (27) is arranged between the load signal port (13) and downstream of the input throttle (20), the load signal (13) is further connected to a return port (12) of the steering device (7) via an adjustable first load signal throttle (25).

2. The hydraulic steering device according to Claim 1,
**characterized in that**
the input throttle (20) and the second load signal throttle (27) have an opposing closure characteristic.

3. The hydraulic steering device according to any one of the preceding claims,
**characterized in that**
the input throttle (20) is closed in the neutral position of the steering device (7) and the second load signal throttle (27) is open.

4. The hydraulic steering device according to any one of the preceding claims,
**characterized in that**
the second load signal throttle (27) only closes at higher steering speeds.

## Revendications

1. Dispositif de direction hydraulique pour installations mobiles, comprenant un circuit de direction pour un dispositif de direction (7) et un circuit de travail pour un système hydraulique de travail (5), le circuit de direction et le système hydraulique de travail (5) étant reliés à une pompe d'alimentation (2) par le biais d'une soupape commune de diviseur de débit (3), la soupape de diviseur de débit (3) étant reliée à un raccordement de signal de charge (13) du dispositif de direction (7),
**dans lequel**
le dispositif de direction (7) présente un étranglement d'entrée réglable (20) qui est relié à la soupape de diviseur de débit (3) par le biais d'un raccordement d'admission (9) du dispositif de direction (7), un montage parallèle composé d'un étranglement (26) et d'un second étranglement de signal de charge réglable (27) est disposé entre le raccordement de signal de charge (13) et en aval de l'étranglement d'entrée (20), le raccordement de signal de charge (13) est en outre relié à un raccordement de retour (12) du dispositif de direction (7) par le biais d'un premier étranglement de signal de charge réglable (25).

2. Dispositif de direction hydraulique selon la revendication 1,
**caractérisé en ce que**
l'étranglement d'entrée (20) et le second étranglement de signal de charge (27) comportent une caractéristique de fermeture opposée.

3. Dispositif de direction hydraulique selon l'une quelconque des revendications précédentes,
**caractérisé en ce que**
l'étranglement d'entrée (20) est fermé dans la position neutre du dispositif de direction (7) et le second étranglement de signal de charge (27) est ouvert.

4. Dispositif de direction hydraulique selon l'une quelconque des revendications précédentes,
**caractérisé en ce que**
le second étranglement de signal de charge (27) ne se ferme qu'en cas de vitesses de direction plus élevées.
